(19) Europäisches Patentamt / European Patent Office / Office européen des brevets

(11) **EP 3 182 385 A1**

(12) **DEMANDE DE BREVET EUROPEEN**

(43) Date de publication:
**21.06.2017 Bulletin 2017/25**

(51) Int Cl.:
**G07C 9/00** (2006.01)

(21) Numéro de dépôt: **16196623.9**

(22) Date de dépôt: **31.10.2016**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **10.11.2015 FR 1560746**

(71) Demandeur: **Antalios**
**13009 Marseille (FR)**

(72) Inventeurs:
• **ADAM, Patrick**
**13600 La Ciotat (FR)**
• **PISTORESI, Christophe**
**13170 Les Pennes Mirabeau (FR)**

(74) Mandataire: **Boura, Olivier et al**
**Cabinet Beau de Loménie**
**232, avenue du Prado**
**13008 Marseille (FR)**

(54) **PROCÉDÉ ET SYSTÈME DE CONTRÔLE DE L'OUVERTURE DE PORTES DONNANT ACCÈS À DIFFÉRENTES ZONES À ACCÈS RÉGLEMENTÉ D'UN PÉRIMÈTRE SÉCURISÉ**

(57) L'invention concerne un procédé et un système de contrôle de l'ouverture de portes (D1-D6) donnant accès à différentes zones à accès réglementé (P1-P6) d'un périmètre sécurisé, comprenant l'obtention, au moyen de lecteurs (4a, 4b) spécifiques à chaque porte du périmètre sécurisé, d'un identifiant d'une personne souhaitant ouvrir une porte du périmètre sécurisé pour accéder à une zone à accès réglementé, l'obtention d'au moins une information contextuelle relative à l'environnement de la zone à accès réglementé dans laquelle la personne souhaite accéder, et la détermination, par une entité de pilotage (6) spécifique à la zone à accès réglementé dans laquelle la personne souhaite accéder, d'une décision d'accès, ladite décision d'accès étant établie à partir de l'identifiant de la personne et de l'information contextuelle.

FIG.1

EP 3 182 385 A1

## Description

<u>Arrière-plan de l'invention</u>

La présente invention se rapporte au domaine général du contrôle de l'ouverture de portes donnant accès à différentes zones à accès réglementé d'un périmètre sécurisé.

Le besoin du contrôle d'accès a considérablement augmenté dans notre société. En effet, le problème de l'insécurité dans divers secteurs, ainsi que les moyens informatiques mis en oeuvre pour lutter contre cette tendance sont de plus en plus présents. Notamment, de nombreux organismes (gouvernementaux ou entrepreneurs) travaillent sur des dossiers de nature confidentielle, ce qui les oblige à mettre en place un système de contrôle d'accès à ces dossiers. De même, la plupart des lieux de travail, tels que les bureaux d'une entreprise, les entrepôts et les magasins de vente au détail, ont besoin de sécuriser leurs locaux afin d'empêcher le vol d'une propriété immatérielle et/ou de marchandises, et de protéger leurs employés. Il en résulte dans ces organismes un besoin grandissant de traçabilité des objets et des personnes.

Les systèmes connus de l'art antérieur pour le contrôle d'accès à l'intérieur de pièces d'un périmètre sécurisé sont généralement basés sur le port de badges par les personnes circulant au sein du périmètre sécurisé, les personnes devant s'identifier au niveau de la porte d'entrée de chaque pièce afin d'obtenir ou non l'autorisation d'accès. Ces systèmes présentent des limites quant à leur manière de prendre la décision d'accès (concernant le passage d'une personne d'une pièce à une autre) qui est centralisée, et dans le niveau de sécurité de l'accès qui repose généralement sur le seul critère de l'identifiant de la personne (par l'intermédiaire du badge porté par la personne).

Généralement, ces systèmes exploitent une base de données distante au cours du processus de contrôle, ce qui présente des inconvénients en termes de temps de réponse à une demande d'accès et de vulnérabilité du système en cas d'attaques malveillantes ou de situations d'exploitation dégradée. La prise de décision concernant l'accès est ainsi centralisée et s'effectue typiquement au niveau d'un ordinateur central dans lequel les données sont sauvegardées. De plus, cette prise de décision est limitée car elle se base sur seulement quelques critères, tels que l'autorisation d'accès d'une personne et un horaire, et non flexible (c'est-à-dire non adaptable à différents cas de sécurisation).

En outre, ces systèmes n'assurent généralement pas le suivi d'objets, de sorte que la prise de décision ne prend pas en compte l'éventuelle incompatibilité d'objets et de personnes dans une même pièce (cas par exemple d'un document classé secret qui est dans une pièce dans laquelle souhaite se rendre une personne non habilitée à la lecture d'un tel document).

<u>Objet et résumé de l'invention</u>

La présente invention a donc pour objet un procédé et un système de contrôle d'accès qui ne présentent pas les inconvénients précités.

Conformément à l'invention, ce but est atteint grâce à un procédé de contrôle de l'ouverture de portes donnant accès à différentes zones à accès réglementé d'un périmètre sécurisé, comprenant :

l'obtention, au moyen de lecteurs spécifiques à chaque porte du périmètre sécurisé, d'un identifiant d'une personne souhaitant ouvrir une porte du périmètre sécurisé pour accéder à une zone à accès réglementé ;
l'obtention d'au moins une information contextuelle relative à l'environnement de la zone à accès réglementé dans laquelle la personne souhaite accéder ; et
la détermination, par une entité de pilotage spécifique à la zone à accès réglementé dans laquelle la personne souhaite accéder, d'une décision d'accès, ladite décision d'accès étant établie à partir de l'identifiant de la personne et de l'information contextuelle.

Par « périmètre sécurisé », on entend ici tout bâtiment ayant des pièces cloisonnées entre elles par des portes, tel que des locaux d'une entreprise, des entrepôts, des magasins, des usines, des prisons, etc.

Le procédé est remarquable en ce que la décision d'accès (ouverture ou non de la porte) se base, non seulement sur l'identifiant de la personne souhaitant accéder à une zone à accès réglementé du périmètre sécurisé, mais également sur une information contextuelle relative à l'environnement de la zone à accès réglementé. La décision d'accès peut ainsi se baser sur de multiples critères autres que simplement l'identifiant de la personne et l'horaire.

Le procédé est également remarquable en ce que la détermination de la décision d'accès s'effectue au niveau d'entités de pilotage qui sont spécifiques à chaque zone à accès réglementé du périmètre sécurisé. Ainsi, la prise de décision est décentralisée (elle s'effectue localement au niveau de la porte) avec tous les avantages que cela procure. Notamment, tout risque de vulnérabilité du système en cas d'attaques malveillantes ou de situations d'exploitation dégradée peut être écarté.

De manière plus générale, le procédé selon l'invention permet de surveiller de manière intelligente un flux de personnes et d'objets au sein du périmètre sécurisé. En d'autres termes, grâce au procédé selon l'invention, chaque personne et chaque objet circulant au sein du périmètre sécurisé est en permanence sous la surveillance des entités de pilotage et en interaction avec des lecteurs installés au niveau de chaque porte (un lecteur de chaque côté d'une même porte). Ces entités de pilotage ont pour rôle de superviser et de valider les déplacements d'une personne et d'un objet transporté par celle-ci au sein des zones à accès réglementé du périmètre sécurisé. En particulier, les entités de pilotage peuvent traiter les éventuelles incompatibilités qui peuvent exister entre des personnes et des objets.

De façon particulièrement avantageuse, les entités de pilotage des différentes zones à accès réglementé du périmètre sécurisé communiquent entre elles. Ainsi, toutes les entités de pilotage reçoivent les mêmes données (notamment d'accès de personnes et d'objets dans les différentes zones à accès réglementé), ce qui permet leur fonctionnement de manière totalement autonome sans passer par un centre de stockage de données. Les données dynamiques relatives au contenu des zones à accès règlementé sont mises à jour en temps réel et échangées entre les différentes entités de pilotage du périmètre sécurisé.

La décentralisation de la détermination de la décision d'accès permet d'améliorer la sécurité des données et la performance du système de contrôle en évitant de stocker l'ensemble des données au sein d'une seule entité. La décentralisation permet également d'obtenir une décision d'accès plus rapide que si celle-ci était prise par une entité centrale de pilotage (les données transférées sont moins nombreuses).

L'information contextuelle peut être choisie parmi les informations suivantes : autorisation d'accès à un instant déterminé, mode de fonctionnement de la zone à accès réglementé, mode de fonctionnement de la porte, et présence d'éléments en conflit dans la zone à accès réglementé.

De façon avantageuse également, la détermination par l'entité de pilotage de la décision d'accès est réalisée à partir d'un modèle holonique et isoarchique. Avec un tel modèle, toutes les entités de pilotage concernées par une décision d'accès à prendre sont au même niveau de décision et contribuent toutes à la détermination de la décision d'accès.

Dans ce cas, le modèle holonique et isoarchique est de préférence construit à partir de structures matérielles (appelées « M_Holon ») et de structures d'information (appelées « I_Holon ») qui sont associées chacune aux entités suivantes : entités relatives aux personnes à contrôler, entités relatives aux objets à contrôler, entités relatives aux portes à contrôler, et entités relatives aux missions.

Les entités relatives aux personnes à contrôler peuvent chacune être constituées d'une structure matérielle contenant la personne proprement dite, et d'une structure d'information contenant l'identifiant de la personne et des données relatives à la traçabilité des déplacements de la personne à l'intérieur du périmètre sécurisé.

De même, les entités relatives aux objets à contrôler peuvent chacune être constituées d'une structure matérielle contenant l'objet proprement dit, et d'une structure d'information contenant un identifiant de l'objet et des données relatives à la position de l'objet à l'intérieur du périmètre sécurisé.

Quant aux entités relatives aux portes à contrôler, elles peuvent chacune être constituées d'une structure matérielle contenant la porte proprement dite, et d'une structure d'information contenant des données relatives au mode d'ouverture de la porte.

Enfin, les entités relatives aux missions peuvent chacune être constituées d'une structure matérielle contenant une ou plusieurs zones à accès réglementé du périmètre sécurisé, et d'une structure d'information contenant des autorisations d'accès auxdites zones à accès réglementé ou un ordre de circulation dans le périmètre sécurisé.

Comme indiqué précédemment, le modèle holonique et isoarchique à partir duquel la décision d'accès est déterminée est de préférence basée sur une architecture hiérarchique multicritères.

L'invention a également pour objet un système de contrôle de l'ouverture de portes donnant accès à différentes zones à accès réglementé d'un périmètre sécurisé, comprenant :

des moyens de lecture d'un identifiant d'une personne associés à chaque porte du périmètre sécurisé ;
des moyens d'obtention d'au moins une information contextuelle relative à l'environnement de chaque zone à accès réglementé du périmètre sécurisé ;
des entités de pilotage spécifiques à chaque zone à accès réglementé du périmètre sécurisé, lesdites entités de pilotage étant chacune apte à établir une décision d'accès à partir d'un identifiant d'une personne souhaitant ouvrir une porte du périmètre sécurisé pour accéder à une zone à accès réglementé et d'une information contextuelle relative à l'environnement de la zone à accès réglementé dans laquelle la personne souhaite accéder.

Dans ce système, les entités de pilotage des différentes zones à accès réglementé du périmètre sécurisé sont de préférence reliées chacune les unes aux autres pour échanger des données. De plus, les moyens de lecture d'un identifiant d'une personne peuvent comprendre un lecteur de badge par radio-identification.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 représente de façon schématique un périmètre sécurisé équipé d'un système de contrôle de l'ouverture des portes selon l'invention ;
- la figure 2 schématise le principe du procédé de contrôle selon l'invention ;
- la figure 3 représente un exemple de structure de décision élaborée à partir d'une architecture hiérarchique multicritères pour la mise en oeuvre du procédé de contrôle selon l'invention ; et
- la figure 4 est un ordinogramme montrant un exemple de processus de contrôle d'un individu selon l'invention dans un centre pénitentiaire.

Description détaillée de l'invention

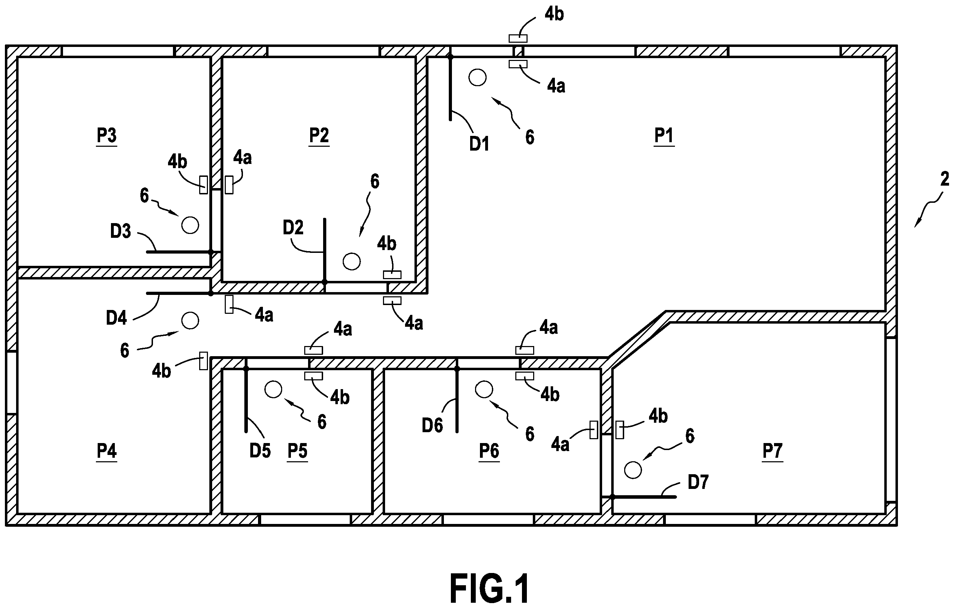

La figure 1 représente de façon schématique un bâtiment 2 formant un périmètre sécurisé équipé d'un système de contrôle de l'ouverture des portes selon l'invention.

Le bâtiment 2 peut être un local d'une entreprise, un entrepôt, un magasin, une usine, une prison, etc. ou tout autre périmètre comprenant plusieurs pièces cloisonnées entre elles par des portes. Ici, le bâtiment 2 comprend 7 pièces P1 à P7 cloisonnées entre elles par autant de portes D1 à D7.

Dans son architecture matérielle, le système de contrôle selon l'invention comprend notamment, pour chaque porte D1 à D7 du bâtiment, deux lecteurs de badge 4a, 4b par radio-identification (ou RFID pour « Radio Frequency Identification »), les deux lecteurs de badge 4a, 4b étant situés de chaque côté de la porte. Bien entendu, les lecteurs de badge RFID pourraient être remplacés par tout autre dispositif de lecture de données matriculaires et/ou biométriques permettant d'identifier une personne.

Le système de contrôle selon l'invention comprend également des entités de pilotage 6 qui sont associées à chacune des zones à accès réglementé du bâtiment (c'est-à-dire à chacune des pièces P1 à P7).

L'entité de pilotage 6 d'une porte comprend un micro-ordinateur équipé d'une mémoire et d'un logiciel qui est configuré pour traiter des données en vue d'une prise de décision d'accès selon un algorithme décrit ultérieurement. Ces données proviennent des deux lecteurs de badge 4a, 4b relatifs à la porte correspondant, mais également des autres entités de pilotage du bâtiment. A cet effet, les entités de pilotage 6 du bâtiment sont reliées entre elles pour échanger des données (par exemple au moyen d'un réseau de communication type filaire, wifi, etc., de préférence sécurisé).

Ainsi, les données des personnes et des objets recueillies par les lecteurs de badge 4a, 4b d'une porte sont transmis à l'entité de pilotage 6 de la pièce correspondante, mais également à toutes les autres entités de pilotage, sans transiter par un centre de stockage.

Le système de contrôle peut également comprendre différents capteurs (de température, pression, etc.) et/ou détecteurs (de fusée, d'incendie, de radioactivité, etc.) positionnés dans toutes ou certaines des pièces P1 à P7 du bâtiment, ces capteurs et/ou détecteurs étant reliés à l'entité de pilotage correspondante. De même que pour les données récupérées par les lecteurs de badge, les données recueillies par ces capteurs et/ou détecteurs sont transmises en temps réel à toutes les entités de pilotage du bâtiment.

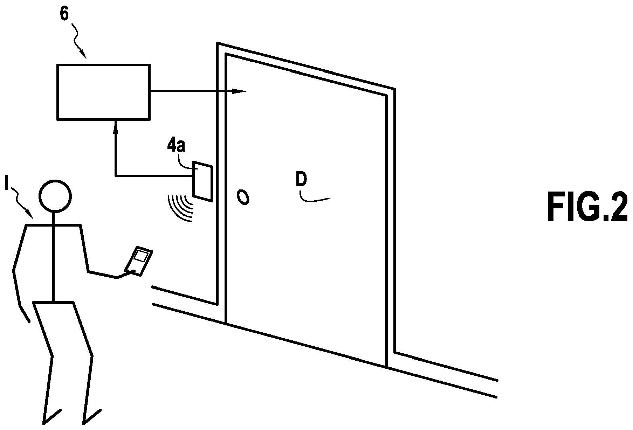

La figure 2 représente de façon schématique le principe (dans ses principales étapes) du procédé de contrôle selon l'invention à partir du système de la figure 1.

Une personne I qui se présente devant une porte D (fermée) du bâtiment pour la franchir doit s'identifier en utilisant son badge RFID (grâce au lecteur de badge 4a correspondant de la porte). Les données transmises par le lecteur de badge (à savoir l'identifiant de la personne I se présentant par exemple sous la forme de données matriculaires et/ou biométriques) sont synchronisées avec les données matriculaires stockées dans une mémoire de l'entité de pilotage 6 correspondante.

L'entité de pilotage analyse alors la demande de la personne en appliquant un modèle d'architecture hiérarchique multicritères (détaillée ultérieurement). Ce modèle de détermination de la décision d'accès prend en compte, non seulement l'identifiant de la personne I et les éventuelles données recueillies par les capteurs et/ou les détecteurs présents dans la pièce, mais également une ou plusieurs informations contextuelles relatives à l'environnement de la pièce dans laquelle la personne souhaite accéder.

Les informations contextuelles relatives à l'environnement de la pièce peuvent être multiples et variées. A titre d'exemples non limitatifs, on pourra citer : une autorisation d'accès à un instant déterminé, un mode de fonctionnement de la pièce, un mode de fonctionnement de la porte, la présence ou non d'éléments (personnes ou objets) en conflit dans la pièce, etc.

La décision d'accès qui est déterminée par cette analyse multicritères réalisée par l'entité de pilotage 6 concernée se concrétise par l'ouverture de la porte (par déverrouillage de sa serrure par exemple) ou le maintien de la porte en position fermée, combiné éventuellement à l'appel ou non d'un agent de surveillance.

Par ailleurs, les données des personnes et des objets qui sont badgés au niveau de la porte D sont dupliquées en temps réel sur toutes les entités de pilotage du bâtiment. Il en est de même pour les informations contextuelles relatives à l'environnement de la pièce. Cette décentralisation des données permet à chaque entité de pilotage de bénéficier des mêmes informations et ainsi de pouvoir prendre une décision d'accès de manière autonome avec un temps de réponse minimisé. Les données accessibles sont notamment disponibles même en cas de fonctionnement dégradé (par exemple en cas de panne du réseau de communication).

Comme pour les données, le contrôle au sein d'une entité de pilotage est décentralisé. En particulier, tout lien de subordination hiérarchique est abandonné au profit de liens hétérarchiques (ou isoarchique). Dans le système et le procédé de contrôle selon l'invention, la décentralisation est caractérisée par une architecture fonctionnelle basée sur la duplication de mécanismes de prise de décision identiques sur toutes les entités de pilotage du système de contrôle. Les fonctions de gestion des demandes d'accès sont reproduites à l'identique sur toutes ces entités de pilotage et ces dernières font l'objet d'un paramétrage permettant d'adapter les mécanismes de prise de décision à leurs propres caractéristiques afin d'obtenir des comportements différents.

Pour assurer le caractère décentralisé de la prise de décision et l'élimination de toute structure décisionnelle hiérarchique, le procédé de contrôle selon l'invention met en oeuvre un modèle holonique et isoarchique.

Par isoarchie, on entend qu'un même pouvoir de décision est accordé à toutes les entités de pilotage du système de contrôle selon l'invention. Ainsi, à un même niveau de prise de décision, les différentes entités de pilotage ont exactement la même autorité (tant sur le plan fonctionnel que temporel). Dans cette architecture de prise de décision isoarchique, toutes les entités de pilotage concernées par une décision à prendre sont au même niveau de décision et contribuent toutes à la prise de décision.

Le modèle holonique est parfaitement adapté à des entités de pilotage pour lesquelles la prise de décision est décentralisée. De manière générale, dans un tel modèle, on définit un élément de base, appelé « holon » comme une entité conceptuelle reposant sur l'association d'une structure matérielle (appelée le « M_Holon ») avec une structure d'information (appelé le « I_Holon ») permettant au holon de prendre une décision de manière autonome et de fonctionner en interaction avec d'autres holons.

Dans l'invention, les structures matérielles (M_Holon) et d'information (I_Holon) sont associées chacune aux entités suivantes : entités relatives aux personnes à contrôler (appelées « Holons Individus »), entités relatives aux objets à contrôler (appelées « Holons Objets »), entités relatives aux portes à contrôler (appelées « Holons Portes »), et entités relatives aux missions (appelées « Holons Missions »).

De façon plus précise, les entités relatives aux personnes à contrôler (« Holons Individus ») sont chacune constituées d'une structure matérielle (M_Holon_Individu) contenant la personne proprement dite, et d'une structure d'information (I_Holon Individu) contenant l'identifiant de la personne (par exemple les données matriculaires et/ou biométriques de celle-ci) et des données relatives à la traçabilité des déplacements de la personne à l'intérieur du bâtiment.

Dans le cas décrit ici, c'est la technologie RFID des lecteurs de badge qui permet de relier chaque M_Holon_Individu d'une personne à son I_Holon_Individu. L'identifiant du badge de chaque M_Holon_Individu est scanné à son arrivée à la porte, ce qui permet de synchroniser le M_Holon_Individu avec le I_Holon_Individu et de permettre de connaître l'identifiant de la personne se déplaçant.

Cette identification permet également d'effectuer une traçabilité des déplacements de la personne au sein du bâtiment. A cet effet, lorsqu'une décision d'accès est donnée à la personne (par une ouverture de la porte), le changement d'état de l'entité relative à la personne à contrôler et l'entité relative à sa mission (« Holon Mission » décrit ci-après) peut être réalisé. De même, la présence du M_Holon_Individu dans la nouvelle pièce est transmise à toutes les entités relatives aux portes de cette pièce (« Holons Portes » décrits ci-après) et les entités relatives aux portes de la pièce qui vient d'être quittée sont également informées de ce changement d'état.

Les entités relatives aux objets à contrôler (« Holons Objets ») sont chacune constituées d'une structure matérielle (M_Holon_Objet) contenant l'objet proprement dit, et d'une structure d'information (I_Holon_Objet) contenant un identifiant de l'objet et des données relatives à la position de l'objet à l'intérieur du bâtiment.

De même que pour les « Holons Individus », la technologie RFID permet de relier chaque M_Holon_Objet d'un objet à son I_Holon_Objet. Plus précisément, l'identifiant d'un objet (M_Holon_Objet) est scanné à son entrée dans une pièce (par la détection à travers un lecteur de badge placé dans la pièce), ce qui permet de synchroniser le M_Holon_Objet avec le I_Holon_Objet et de connaître l'identifiant de l'objet entrant dans la pièce. La présence du « Holon Objet » dans la nouvelle pièce et son départ de l'ancienne pièce sont transmis à tous les « Holons Portes » de cette pièce et les « Holons Portes » de la pièce qui vient d'être quittée.

Les entités relatives aux portes à contrôler (« Holons Portes » qui appartient à une ou deux pièces) sont chacune constituées d'une structure matérielle (M_Holon_Porte) contenant la porte proprement dite, et d'une structure d'information (I_Holon_Porte) contenant des données relatives au mode d'ouverture de la porte, à savoir la technologie pour ouvrir la porte (serrure électrique, porte à ouverture motorisée, etc.).

La structure d'information (I_Holon_Porte) peut également contenir des données sur le calendrier d'ouverture de la porte, son mode de fonctionnement (nominal ou spécifique à un cas particulier), son mode d'urgence (alarme, incendie, émeute - pour une prison notamment), etc.

Les entités relatives aux missions (« Holons Missions ») sont chacune constituées d'une structure matérielle (M_Holon_Mission) contenant une ou plusieurs pièces du bâtiment, et d'une structure d'information (I_Holon_Mission) contenant des autorisations d'accès auxdites pièces ou un ordre de circulation dans le bâtiment.

Plus précisément, les « Holons Missions » concernent un Holon Individu ou un groupe de Holons Individus et peut être de deux types : un « Holon Zone » qui contient des autorisations d'accès à un endroit bien précis du bâtiment ou bien un « Holon Chemin » qui contient la permission d'aller d'un endroit à un autre endroit bien précis du bâtiment en spécifiant les portes à franchir. Ce dernier type de Holon peut être temporaire (par exemple une autorisation donnée ponctuellement par un gardien à un prisonnier pour aller à un parloir, à l'infirmerie, etc.) ou cyclique (autorisation de se rendre sur un lieu de travail à un horaire précis chaque jour ou chaque semaine).

Dans le procédé selon l'invention, les ordres de circulation des personnes sont définis directement dans le système de contrôle d'accès de sorte que la structure matérielle (M_Holon_Mission) est synchronisée avec la structure d'information (I_Holon_Mission).

A partir des données (relatives aux personnes et aux objets qui sont recueillies au niveau des portes du bâtiment et des informations contextuelles relatives à l'environnement des pièces dudit bâtiment) qui sont dupliquées en temps réel sur toutes les entités de pilotage, le procédé selon l'invention met en oeuvre, par l'intermédiaire du logiciel équipant chaque entité de pilotage, une analyse hiérarchique multicritères permettant de déterminer une décision d'accès (ouverture ou non de la porte concernée, avec éventuellement appel d'un agent de surveillance).

Ici, cette analyse multicritères prend en compte tous les critères qui peuvent intervenir dans la décision d'accès et permet de classer différentes actions consécutives à une demande d'autorisation d'accès par une personne.

A cet effet, l'analyse met de préférence en oeuvre une architecture hiérarchique multicritères (appelée en anglais « Analytic Hierarchy Process » ou AHP). Une telle architecture, qui est connue de l'homme du métier et qui ne sera donc pas décrite en détails ici, permet de définir le problème de décision sous forme d'une structure hiérarchique pour aider à faire face à des décisions complexes.

Brièvement, une architecture hiérarchique multicritères met en oeuvre une phase « statique » de configuration de l'algorithme dans laquelle est réglé le paramétrage de l'importance relative des critères et de leurs indicateurs et une phase « dynamique » d'exploitation de l'algorithme dans laquelle sont classées les alternatives par rapport à l'objectif global.

La phase « statique » de configuration consiste dans un premier temps à représenter le problème de décision posé par une structure hiérarchique de niveaux reflétant les interactions entre les éléments du problème. Cette décomposition du problème en niveaux est effectuée en partant des directives suivantes : identifier les objectifs généraux (niveau 1), identifier les critères (niveau 2), et identifier les indicateurs en dessous de chaque critère (niveau 3).

L'étape suivante de la phase de configuration consiste à établir un classement des critères (niveau 2) par rapport à l'objectif global (niveau 1). Pour cela, une matrice [CC] de rang nc est construite dans laquelle chaque élément (i,j) est un jugement ou une comparaison d'un couple de critères $Cr_i$, $Cr_j$. La valeur de cette comparaison CC[i,j] est une valeur de l'échelle 1-9, dans laquelle la valeur « 1 » définit une importance équivalente (i.e. aucune préférence), et la valeur « 9 » définit une préférence absolue, de sorte que CC[j ,i] = 1/CC[i,j] et CC[i,i] = 1. Autrement dit, la diagonale de la matrice est constituée de 1 et la partie inférieure est l'inverse de la partie supérieure.

Cette matrice [CC] permet de déterminer le vecteur de priorité [CrOg] qui est donné par la formule :

$$CrOg = CC*e^T / e*CC*e^T, \text{ où } e = 1,1, ..., 1)$$

Le dernier vecteur obtenu correspond au vecteur d'importance relative retenu. Celui-ci exprime l'importance relative des critères (niveau 2) par rapport à l'objectif global (niveau 1).

L'étape suivante de la phase de configuration consiste à établir un classement des indicateurs (niveau 3) par rapport aux critères (niveau 2). Pour l'ensemble des critères du niveau 2, il est établi un classement de chacun des indicateurs par rapport à son critère correspondant. A cet effet, une matrice carrée $[Ind_k]$ de rang $n_k$ est construite dans laquelle chaque élément (i,j) est un jugement ou une comparaison d'un couple d'indicateurs $I_{k,i}$ et $I_{k,j}$, $n_k$ étant le nombre d'indicateurs du critère k. Pour chaque matrice $[Ind_k]$, on estime le vecteur de priorité $[ICr_k]$. Le vecteur retenu exprime l'importance relative des indicateurs (niveau 3) par rapport à chacun des critères (niveau 2). On calcule également dans cette étape le ratio de cohérence C.R pour vérifier la cohérence des comparaisons.

La phase « dynamique » d'exploitation de l'algorithme ainsi configuré permet de classer les alternatives par rapport à l'objectif global.

Cette phase consiste dans un premier temps à établir un classement des alternatives (niveau 4) par rapport aux indicateurs (niveau 3) de chaque critère. Pour chaque indicateur $I_{k,j}$ du niveau 3 appartenant à l'ensemble $I_k$, on compare les valeurs $I_{k,l}$ entre les alternatives $A_i$ de l'ensemble des alternatives considérées de sorte à construire les matrices [Ak,l] avec : $A_{k,l}(i,j) = I_{k,l}(j) / I_{k,l}(i)$ dans le but de minimiser le critère et dans le but de conserver la même signification d'échelle utilisée dans l'algorithme.

Dans un second temps, il convient de classer l'importance relative des alternatives (niveau 4) par rapport aux critères (niveau 2) en parcourant de manière ascendante l'arborescence et en effectuant les comparaisons de l'ensemble des alternatives par rapport à tous les critères. Un vecteur donnant l'importance relative des alternatives par rapport aux critères est construit et ce pour chacun des critères :

$$[ACr_k] = [AInd_k] * [ICr_k]$$

Les vecteurs [ACrk] permettent de construire une matrice [ACr] de la façon suivante : [ACr] = [ACr1, ACr2, ..., $ACr_{nc}$], avec nc pour le nombre de critères.

Enfin, l'étape suivante consiste à classer l'importance relative des alternatives (niveau 4) par rapport à l'objectif global (niveau 1). A cet effet, le vecteur de priorité [CrOg] déterminé précédemment, ainsi que le classement effectué à l'étape précédente, permettent le classement des solutions finales, celui-ci étant obtenu par le produit [ACr] * [CrOg] = [AOg] et donne le vecteur de priorité des alternatives considérées, c'est-à-dire l'importance relative de ces dernières par rapport à l'objectif global (Og). Le choix de la meilleur alternative s'effectue à partir du vecteur de priorité [Perf], qui établit un classement des valeurs du vecteur [Perf] par ordre décroissant. La meilleure solution est alors le plus grand élément de [Perf].

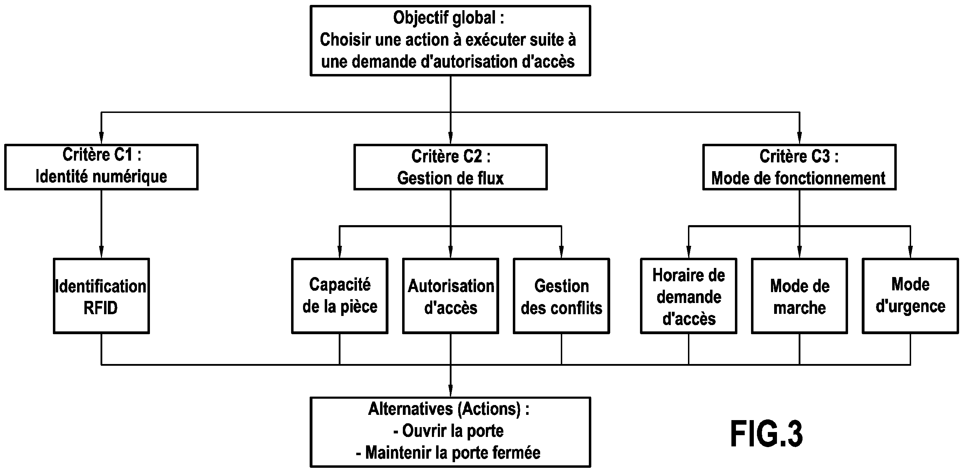

La figure 3 représente l'application d'une telle architecture hiérarchique multicritères à la gestion des autorisations d'accès de détenus dans différentes pièces d'un centre pénitentiaire (périmètre sécurisé) en indiquant les différentes actions qui peuvent être prises suite à une demande d'autorisation d'accès par un détenu.

Trois critères (niveau 2) importants interviennent dans la prise de décision sur cet exemple : l'identité numérique (C1), la gestion de flux de personnes (C2), et le mode de fonctionnement de la zone à accès réglementé (C3).

L'identité numérique est un critère qui consiste en la vérification numérique de la personne à contrôler. Ce critère est représenté par un seul indicateur qui est l'identifiant de la personne. Cette identification est le résultat de la vérification des données matriculaires et/ou biométriques et la coïncidence avec les données du badge à lecture RFID.

La gestion de flux de personnes est un critère qui permet de prendre en compte la gestion interne des autorisations d'accès (ordres de circulation), des incompatibilités entre personnes et/ou groupes et/ou objets, et de l'état des pièces à l'instant t. Ce critère est représenté par trois indicateurs :

    i) Capacité de la pièce : indicateur qui permet de limiter l'accès à une pièce quand sa capacité maximale d'accueil est atteinte. Pour calculer cet indicateur, deux informations sont nécessaires, à savoir le nombre de personnes présentes dans la pièce à un instant t (ce nombre étant mis à jour en permanence à travers les messages échangés entre les entités de pilotage du bâtiment), et la capacité maximale de la pièce qui est définie et sauvegardée dans l'entité de pilotage de la pièce.

    ii) Gestion des conflits : indicateur qui permet de limiter l'accès à une pièce lorsqu'elle contient un ou plusieurs personnes/objets qui sont incompatibles avec la personne se trouvant devant la porte donnant accès à la pièce et qui demande l'autorisation d'entrer.

    iii) Autorisation d'accès : il s'agit de vérifier dans la liste des « Holons Missions » si la porte appartient à un chemin ou à une zone dans laquelle la personne est en libre circulation.

Le mode de fonctionnement de la zone à accès réglementé est un critère qui représente le mode de fonctionnement de la zone concernant les horaires d'ouverture des portes, mode de marche, et mode d'urgence. Il est représenté par trois indicateurs :

    i) Horaire de demande d'accès : les contraintes temporelles peuvent être spécifiées au niveau de la porte (« Holons Portes ») comme au niveau de l'autorisation d'accès (« Holons Missions »). En effet, chaque « Holon Porte » contient des informations concernant l'horaire d'ouverture de la porte qu'il représente et chaque « Holon Mission » peut être lié à une contrainte temporelle qui définit la validité de l'autorisation. Plusieurs situations peuvent être distinguées : l'heure est en dehors des plages horaires indiquées ; l'heure est dans la plage horaire de l'Holon Porte, mais en dehors de celle de l'Holon Mission ; l'heure est dans la plage horaire de l'Holon Mission, mais en dehors de celle de l'Holon Porte ; et l'heure appartient aux plages horaires des Holon Porte et Holon Mission.

ii) Mode de marche : indicateur qui permet d'indiquer le mode de marche en cours de la zone. Ici, cet indicateur peut être de trois types : nominal (i.e. pas de recommandation particulière) ; émeute (des recommandations particulières favorisant ou non l'ouverture de la porte peuvent être exprimées) ; et évasion (des recommandations particulières favorisant ou non l'ouverture de la porte peuvent être exprimées). Ce mode de marche doit, en fonctionnement nominal, être le même pour toutes les entités de pilotage. Cependant, il est possible d'envisager des situations de marches dégradées dans lesquelles certains secteurs de la zone ne fonctionnent pas comme les autres.
iii) Mode d'urgence : indicateur qui permet de prendre en compte les cas d'urgence, d'incendie ou d'évacuation de la zone à contrôler. Cet indicateur peut être de deux types : nominal (pas de recommandation particulière) ; incendie ou évacuation (recommandation d'ouverture de la porte avec activation des caméras de surveillance).

Le système de contrôle selon l'invention a été implémenté pour gérer le contrôle d'accès des détenus et le suivi de leurs objets personnels dans un centre pénitentiaire. Cette implémentation est composée de deux types de modules logiciels : un module Observateur et des modules d'entités de pilotage. Le module Observateur sert à la configuration du système de contrôle, ainsi qu'à l'observation en temps réel des activités de chaque porte du centre pénitentiaire, tandis que les modules d'entités de pilotage sont déployés au niveau de chaque porte du centre pénitentiaire et gèrent les demandes d'autorisation d'accès. Chaque module d'entité de pilotage est connecté en permanence à deux lecteurs de badge de type RFID (un lecteur de chaque côté de la porte) pour la détection de l'identifiant d'une personne se présentant devant la porte et pour la synchronisation entre son M_Holon_Individu et son I_Holon_Individu. Le module Observateur et les modules d'entités de pilotage communiquent entre eux au travers d'un réseau IP.

Les principaux acteurs du système de contrôle de flux de personnes dans ce cas d'application peuvent être distingués à partir de leurs fonctions et de leurs besoins. Nous pouvons identifier les acteurs suivants :

- le détenu : il représente la personne à contrôler qui est supposée se déplacer au sein de la zone fermée et sécurisée. Pour accéder à une pièce, un détenu doit se présenter devant la porte donnant l'accès, muni d'un badge RFID pour qu'il soit détecté.
- le configurateur : c'est la personne qui a le contrôle sur toutes les fonctionnalités du module Observateur. En effet, le module configurateur est habilité à suivre en temps réel les activités dans chaque porte, ainsi qu'à configurer le système à travers le poste Observateur (configuration à distance des entités de pilotage, configuration des pièces, configuration des individus, etc.).
- le lecteur RFID : il représente l'élément responsable de la lecture et de la transmission vers les entités de pilotage des données stockées dans un badge RFID d'une personne demandant l'accès. Cet acteur peut aussi intervenir au niveau du module Observateur au moment de création d'un badge RFID.

De façon plus précise, le module Observateur permet la gestion de la communication avec les entités de pilotage, à travers des messages d'initialisation et d'états de chaque entité de pilotage, ainsi que la configuration du système. Ces fonctionnalités se décomposent donc en deux classes :

- les fonctionnalités relatives à la communication avec les entités de pilotage, ainsi que l'observation de tout ce qui se passe dans ces dernières en temps réel. En effet, chaque entité de pilotage doit envoyer à l'observateur le résultat de chaque demande d'autorisation d'accès effectuée, ce résultat étant alors affiché et enregistré.
- les fonctionnalités relatives à la configuration du système de contrôle : ces configurations concernent les entités de pilotage, les pièces de la prison, les individus circulant dans la prison (prisonnier ou gardien - agent de surveillance ou configurateur), les objets des individus, les groupes d'individus, les conflits qui peuvent exister entre les prisonniers et les ordres de circulation. Ces configurations nécessitent la mise à jour de toutes les entités de pilotage. Ces dernières qui ne sont pas connectées au moment de changement de la configuration seront mises à jour dès leur connexion à condition que l'Observateur soit connecté. Seule l'Observateur peut mettre à jour la configuration dans les entités de pilotage.

L'acteur Lecteur RFID intervient dans la Gestion des individus et la Gestion des objets. En effet, il permet d'attribuer des badges RFID aux individus et aux objets.
Le tableau ci-dessous permet de visualiser les différents types de cas d'utilisation relatifs à la Gestion des individus.

Tableau « Gestion des Individus »

| Cas d'utilisation | Acteurs concernés | Description |
|---|---|---|
| Ajouter Individu | Configurateur | Permet d'ajouter un individu dans le système. Les champs à remplir sont : Identifiant (il faut qu'il soit unique), type, nom, prénom, adresse, etc. En validant, une entrée individu sera ajoutée dans le fichier de configuration. |
| Créer badge RFID | Configurateur Lecteur RFID | Permet d'associer un badge RFID à un individu. Un lecteur RFID est indispensable pour extraire l'identifiant du badge. L'entrée « individu » doit exister dans le système pour pouvoir lui associer un badge. Cette association est enregistrée dans le fichier de configuration. |
| Editer Individu | Configurateur | Permet d'éditer les données d'un individu en particulier. Toutes les données peuvent être modifiées sauf l'identifiant. La modification entraîne la mise à jour du fichier de configuration, ainsi que le Holon_Individu (si présent sur le réseau). |
| Supprimer Individu | Configurateur | Permet de supprimer un individu du système. La suppression d'un individu entraine la suppression de ses données du fichier de configuration, ainsi que la suppression de son Holon_Individu du réseau (de toutes les entités de pilotage). La suppression retire automatiquement l'individu de toutes les entités de pilotage. |
| Lancer Individu | Configurateur | Permet de lancer un Holon_Individu dans une pièce sélectionnée. Pour que le système soit cohérent, le configurateur doit s'assurer que l'individu correspondant soit physiquement dans la pièce en question. |
| Retirer Individu | Configurateur | Permet de retirer un Holon_Individu du réseau. Il faut s'assurer que l'individu ne soit plus dans la zone sinon il sera bloqué car ses demandes d'accès seront rejetées. |

Le tableau ci-dessous permet de visualiser les différents types de cas d'utilisation relatifs à la Gestion des Objets.

Tableau « Gestion des Objets »

| Cas d'utilisation | Acteurs concernés | Description |
|---|---|---|
| Ajouter Objet | Configurateur | Permet d'ajouter un objet dans le système. Les champs à remplir sont : Identifiant (il faut qu'il soit unique), type, nom et responsable de l'objet. En validant, une entrée objet sera ajoutée dans le fichier de configuration. |
| Créer badge RFID | Configurateur Lecteur RFID | Permet d'associer un badge RFID à un objet (de façon similaire au tableau ci-dessus). |
| Editer Objet | Configurateur | Permet d'éditer les données d'un objet en particulier. Toutes les données peuvent être modifiées sauf l'identifiant. La modification entraîne la mise à jour du fichier de configuration, ainsi que le Holon_ Objet (si présent sur le réseau). |
| Supprimer Objet | Configurateur | Permet de supprimer un objet du système. La suppression d'un objet entraine la suppression de ses données du fichier de configuration, ainsi que la suppression de son Holon_Objet du réseau. La suppression retire automatiquement l'objet de toutes les entités de pilotage. |
| Lancer Objet | Configurateur | Permet de lancer un Holon_Objet dans une pièce sélectionnée. Pour que le système soit cohérent, le configurateur doit s'assurer que l'objet correspondant soit physiquement dans la pièce en question. |
| Retirer Objet | Configurateur | Permet de retirer un Holon_Objet du réseau. Il faut s'assurer que l'objet ne soit plus dans la zone sécurisée. |

Le tableau ci-dessous permet de visualiser les différents types de cas d'utilisation relatifs à la Gestion des Ordres.

Tableau « Gestion des Ordres »

| Cas d'utilisation | Acteurs concernés | Description |
|---|---|---|
| Ajouter Ordre | Configurateur | Permet d'ajouter une autorisation d'accès en créant des ordres de circulation (des Holons-Missions). Deux types d'ordre de circulation peuvent être créés : ordre de libre circulation dans une zone particulière ou ordre d'emprunter un chemin particulier (les entités de pilotage concernées par ce chemin doivent être spécifiées). Chaque ordre doit être affecté à un ou plusieurs individus ou un groupe particulier d'individus. Il est possible aussi d'attribuer des contraintes |
| | | temporelles (plage horaire ou date précise) à un ordre pour limiter sa validité. L'ordre créé est enregistré dans un fichier de configuration. Pour qu'il soit pris en compte, le Holon_Mission doit être lancé dans les entités de pilotage concernées par la zone ou le chemin |
| Editer Ordre | Configurateur Lecteur RFID | Permet d'éditer un ordre de circulation. En cas de modification, l'ordre lancé sera mis à jour à distance |
| Supprimer Ordre | Configurateur | A la suppression de l'ordre, le Holon_Mission se retire automatiquement des entités de pilotage et se détruit |
| Lancer Ordre | Configurateur | Permet d'envoyer un ordre de circulation (ou une autorisation d'accès) aux entités de pilotage concernées |
| Retirer Ordre | Configurateur | Permet de retirer un ordre de circulation (ou une autorisation d'accès) des entités de pilotage |

Le tableau ci-dessous permet de visualiser les différents types de cas d'utilisation relatifs à la Gestion des Groupes.

Tableau « Gestion des Groupes »

| Cas d'utilisation | Acteurs concernés | Description |
|---|---|---|
| Ajouter Groupe | Configurateur | Permet d'ajouter un groupe d'individu. Par exemple, un groupe peut caractériser des individus qui doivent avoir le même comportement et les mêmes autorisations d'accès. Dans ce cas, il est plus simple de les regrouper et d'attribuer des autorisations à tout le groupe. Les groupes sont enregistrés dans un fichier de configuration |
| Editer Groupe | Configurateur Lecteur RFID | Permet d'éditer un groupe, ajouter ou supprimer un membre du groupe. Les modifications d'un groupe sont envoyées automatiquement à toutes |
| | | les entités de pilotage |
| Supprimer Groupe | Configurateur | Permet de supprimer un groupe. La suppression permet également de retirer le groupe de toutes les entités de pilotage |
| Lancer Groupe | Configurateur | Permet de lancer un groupe créé à toutes les entités de pilotage concernées pour qu'il soit pris en compte dans la gestion des autorisations d'accès |
| Retirer Groupe | Configurateur | Permet de retirer un groupe des entités de pilotage |

Le tableau ci-dessous permet de visualiser les différents types de cas d'utilisation relatifs à la Gestion des Incompatibilités.

Tableau « Gestion des Incompatibilités »

| Cas d'utilisation | Acteurs concernés | Description |
|---|---|---|
| Ajouter Incompatibilité | Configurateur | Permet d'ajouter une incompatibilité. Une incompatibilité peut être entre Individu-individu, Individu-objet, groupe-individu (entre chacun des membres du groupe et un individu en particulier), groupe-objet (entre chacun des membres du groupe et un objet en particulier), groupe-groupe (entre chacun des membres du 1er groupe et chacun des membres du 2ème groupe). Une incompatibilité peut avoir deux degrés de danger : haut ou bas. Les incompatibilités sont enregistrées dans un fichier de configuration |
| Editer Incompatibilité | Configurateur Lecteur RFID | Permet d'éditer une incompatibilité, ajouter ou supprimer un membre. Les modifications d'une incompatibilité sont envoyées automatiquement à toutes les entités de pilotage |
| Supprimer Incompatibilité | Configurateur | Permet de supprimer une incompatibilité. La suppression permet également de retirer |
|  |  | l'incompatibilité de toutes les entités de pilotage |
| Lancer Incompatibilité | Configurateur | Permet de lancer une incompatibilité créée à toutes les entités de pilotage concernées pour qu'elle soit pris en compte dans la gestion des autorisations d'accès |
| Retirer Incompatibilité | Configurateur | Permet de retirer une incompatibilité des entités de pilotage |

Le rôle principal des modules d'entités de pilotage consiste à gérer les demandes d'autorisation d'accès à travers les services offerts aux différents types de Holons. Une entité de pilotage interagit en permanence avec des acteurs externes qui vont l'aider à collecter les données nécessaires pour faire appel à l'architecture hiérarchique multicritères à la décision permettant de résoudre le problème décisionnel concernant une demande d'accès.

Le tableau ci-dessous permet de visualiser les différents types de cas d'utilisation relatifs à une entité de pilotage du système de contrôle dans le cas d'application à un centre pénitentiaire.

Tableau des Entités de Pilotage

| Cas d'utilisation | Acteurs concernés | Description |
|---|---|---|
| Demander accès | Individu(s) ayant un badge RFID | Toute personne circulant dans le centre pénitentiaire et voulant franchir une porte doit demander l'accès à l'entité de pilotage de celle-ci. La demande d'accès se fait à travers la présentation d'un badge RFID valide. Si l'accès est accepté, l'entité de pilotage envoie sa nouvelle situation à toutes les autres entités de pilotage pour qu'elles mettent à jour le contenu de leurs pièces |
| Détecter badge RFID | Lecteur RFID | Dès la présentation du badge, l'identifiant de l'Individu sera détecté par le lecteur RFID et ses informations transmises à l'entité de pilotage |
|  |  | correspondante |
| Envoyer Situation | Entités de pilotage | L'envoi de la situation (contenu des pièces) se fait après un changement de topologie (connexion/déconnexion d'une entité de pilotage particulière) ou après un changement dans le contenu d'une pièce (entrée/sortie d'un individu ou d'un objet) |
| Mettre à jour la situation | Fonction déclenchée en interne | Après chaque réception des situations des autres entités de pilotage, l'entité de pilotage met à jour sa situation interne (configuration interne, état des pièces) |

(suite)

| Cas d'utilisation | Acteurs concernés | Description |
|---|---|---|
| Mettre à jour et réinitialiser | Observateur | La mise à jour et la réinitialisation de l'entité de pilotage sont faites à distance au niveau du module Observateur en cas de modification des paramètres de l'Holon_Porte ou de la pièce. Après réinitialisation, l'entité de pilotage doit maintenir sa dernière configuration (c'est-à-dire récupérer les informations sur les pièces qu'elle sépare, récupérer tous les Holons_Individus et les Holons_Missions qui étaient présents, etc.). Cette mise à jour est envoyée par le module Observateur |

Le cas d'utilisation permettant de déclencher le procédé de contrôle est celui de la détection du badge RFID correspondant à un individu. L'évènement de détection permet la synchronisation entre le I_Holon_Individu et le M_Holon_Individu (qui n'est autre que l'individu). Le I_Holon_Individu intéragit, par la suite, avec les différents Holons_Missions existants au sein de l'entité de pilotage, pour vérifier si la personne dispose d'une autorisation d'accès ou non, et avec le Holon_Porte de la porte pour vérifier les contraintes d'accès relatives à la pièce destinataire (capacité maximale, présence de personnes en conflit, etc.). Les résultats de ces interactions vont être utilisés par l'architecture hiérarchique multicritères pour répondre à la demande d'autorisation d'accès. Selon la réponse, l'entité de pilotage donne l'ordre d'ouvrir ou non la porte et envoie sa décision au module Observateur et sa nouvelle situation (contenu des pièces) à toutes les entités de pilotage pour qu'elles mettent à jour le contenu de leurs pièces.

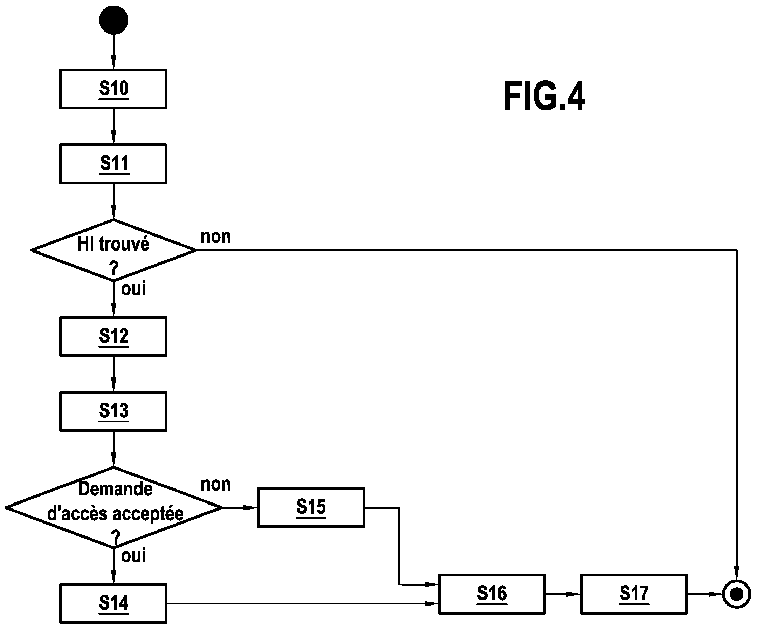

Le processus de contrôle d'un Individu (détenu ou gardien) dans le centre pénitentiaire est schématisé sur la figure 4. Sur détection de son badge RFID (S10), l'entité de pilotage correspondante recherche le Holon_Individu correspondant (S11). Si celui-ci est trouvé, le Holon_Individu interagit avec le Holon_Porte correspondant et les différents Holons_Missions existants (S12). L'architecture hiérarchique multicritères est alors invoquée (S13) pour déterminer si la demande d'accès est autorisée auquel cas l'entité de pilotage ordonne l'ouverture de la porte (S14) ou si celle-ci est refusée auquel cas l'entité de pilotage ordonne le maintien de la la porte fermée (S15). Dans les deux cas, la décision d'accès est envoyée au module Observateur (S16) et la nouvelle situation (contenu de la pièce) est envoyée à toutes les entités de pilotage pour qu'elles mettent à jour le contenu de leurs pièces (S17).

Pour traiter les demandes d'autorisation d'accès, chaque entité de pilotage doit recueillir les données nécessaires à l'exécution de l'algorithme hiérarchique multicritères. Ces données sont stockées dans des fichiers de configuration et sont de deux types :

- Les données statiques : ce sont les données relatives à la porte, aux individus, objets, ordres, groupes et incompatibilités. Seul le module Observateur peut envoyer des mises à jour des données statiques aux différents modules des entités de pilotage. L'envoi des données statiques s'effectue dès que l'entité de pilotage se connecte au réseau.
- Les données dynamiques : ce sont les données relatives au contenu des pièces séparées par la porte. En effet, dans le but de traiter correctement les incompatibilités, chaque porte doit avoir un contenu à jour des pièces qu'elle sépare. Le contenu des pièces pour chaque porte se met à jour à chaque demande d'accès effectuée sur n'importe quelle porte et à chaque entrée/sortie d'un objet de n'importe quelle pièce de la zone sécurisée. Cette mise à jour est assurée par la fusion des situations (ou contenus) des pièces qui sont envoyées après chaque demande d'accès d'un individu ou d'entrée sortie d'un objet à travers le réseau.

## Revendications

1. Procédé de contrôle de l'ouverture de portes (D1-D6) donnant accès à différentes zones à accès réglementé (P1-P6) d'un périmètre sécurisé, comprenant :

   l'obtention, au moyen de lecteurs (4a, 4b) spécifiques à chaque porte du périmètre sécurisé, d'un identifiant d'une personne (I) souhaitant ouvrir une porte du périmètre sécurisé pour accéder à une zone à accès réglementé ;
   l'obtention d'au moins une information contextuelle relative à l'environnement de la zone à accès réglementé dans laquelle la personne souhaite accéder ; et
   la détermination, par une entité de pilotage (6) spécifique à la zone à accès réglementé dans laquelle la personne souhaite accéder, d'une décision d'accès, ladite décision d'accès étant établie à partir de l'identifiant de la personne et de l'information contextuelle.

**2.** Procédé selon la revendication 1, dans lequel les entités de pilotage des différentes zones à accès réglementé du périmètre sécurisé communiquent entre elles.

**3.** Procédé selon l'une des revendications 1 et 2, dans lequel l'information contextuelle est choisie parmi les informations suivantes :

autorisation d'accès à un instant déterminé, mode de fonctionnement de la zone à accès réglementé, mode de fonctionnement de la porte, et présence d'éléments en conflit dans la zone à accès réglementé.

**4.** Procédé selon l'une quelconque des revendications 1 à 3, dans lequel la détermination par l'entité de pilotage de la décision d'accès est réalisée à partir d'un modèle holonique et isoarchique.

**5.** Procédé selon la revendication 4, dans lequel le modèle holonique et isoarchique est construit à partir de structures matérielles (M_Holon) et structures d'information (I_Holon) qui sont associées chacune aux entités suivantes : entités relatives aux personnes à contrôler, entités relatives aux objets à contrôler, entités relatives aux portes à contrôler, et entités relatives aux missions.

**6.** Procédé selon la revendication 4, dans lequel les entités relatives aux personnes à contrôler sont chacune constituées d'une structure matérielle contenant la personne proprement dite, et d'une structure d'information contenant l'identifiant de la personne et des données relatives à la traçabilité des déplacements de la personne à l'intérieur du périmètre sécurisé.

**7.** Procédé selon l'une des revendications 4 et 5, dans lequel les entités relatives aux objets à contrôler sont chacune constituées d'une structure matérielle contenant l'objet proprement dit, et d'une structure d'information contenant un identifiant de l'objet et des données relatives à la position de l'objet à l'intérieur du périmètre sécurisé.

**8.** Procédé selon l'une quelconque des revendications 4 à 7, dans lequel les entités relatives aux portes à contrôler sont chacune constituées d'une structure matérielle contenant la porte proprement dite, et d'une structure d'information contenant des données relatives au mode d'ouverture de la porte.

**9.** Procédé selon l'une quelconque des revendications 4 à 8, dans lequel les entités relatives aux missions sont chacune constituées d'une structure matérielle contenant une ou plusieurs zones à accès réglementé du périmètre sécurisé, et d'une structure d'information contenant des autorisations d'accès auxdites zones à accès réglementé ou un ordre de circulation dans le périmètre sécurisé.

**10.** Procédé selon l'une quelconque des revendications 4 à 9, dans lequel le modèle holonique et isoarchique à partir duquel la décision d'accès est déterminée est basée sur une architecture hiérarchique multicritères.

**11.** Système de contrôle de l'ouverture de portes (D1-D6) donnant accès à différentes zones à accès réglementé (P1-P6) d'un périmètre sécurisé, comprenant :

des moyens de lecture d'un identifiant (4a, 4b) d'une personne (I) associés à chaque porte du périmètre sécurisé ;
des moyens d'obtention d'au moins une information contextuelle relative à l'environnement de chaque zone à accès réglementé du périmètre sécurisé ;
des entités de pilotage (6) spécifiques à chaque zone à accès réglementé du périmètre sécurisé, lesdites entités de pilotage étant chacune apte à établir une décision d'accès à partir d'un identifiant d'une personne souhaitant ouvrir une porte du périmètre sécurisé pour accéder à une zone à accès réglementé et d'une information contextuelle relative à l'environnement de la zone à accès réglementé dans laquelle la personne souhaite accéder.

**12.** Système selon la revendication 11, dans lequel les entités de pilotage des différentes zones à accès réglementé du périmètre sécurisé sont reliées chacune les unes aux autres pour échanger des données.

**13.** Système selon l'une des revendications 11 et 12, dans lequel les moyens de lecture d'un identifiant d'une personne comprennent un lecteur de badge par radio-identification.

**FIG.1**

EP 3 182 385 A1

FIG.2

Objectif global :
Choisir une action à exécuter suite à
une demande d'autorisation d'accès

Critère C1 :
Identité numérique

Critère C2 :
Gestion de flux

Critère C3 :
Mode de fonctionnement

Identification
RFID

Capacité
de la pièce

Autorisation
d'accès

Gestion
des conflits

Horaire de
demande
d'accès

Mode de
marche

Mode
d'urgence

Alternatives (Actions) :
- Ouvrir la porte
- Maintenir la porte fermée

FIG.3

# FIG.4

Europäisches
Patentamt

European
Patent Office

Office européen
des brevets

**RAPPORT DE RECHERCHE EUROPEENNE**

Numéro de la demande

EP 16 19 6623

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X<br>Y | US 2008/086758 A1 (CHOWDHURY ATISH DATTA [IN] ET AL) 10 avril 2008 (2008-04-10)<br>* abrégé * *<br>* alinéa [0008] - alinéa [0015] *<br>* alinéa [0031] - alinéa [0108] *<br>* figures 1-7 *<br>* revendications 1-19 * | 1-3,<br>11-13<br>4-10 | INV.<br>G07C9/00 |
| X | EP 2 584 538 A1 (AXIS AB [SE])<br>24 avril 2013 (2013-04-24)<br>* abrégé * *<br>* alinéa [0001] *<br>* alinéa [0013] - alinéa [0014] *<br>* alinéa [0027] - alinéa [0051] *<br>* figures 1-5 * | 1-3,<br>11-13 | |
| Y | US 2003/130860 A1 (DATTA VIC [US] ET AL)<br>10 juillet 2003 (2003-07-10)<br>* abrégé * *<br>* alinéa [0009] - alinéa [0011] *<br>* alinéa [0023] - alinéa [0035] * | 4-10 | |
| A | NAOHIRO KUSUMI ET AL: "A holonic control system based on a universal learning network",<br>ELECTRICAL ENGINEERING IN JAPAN,<br>vol. 124, no. 4, 29 mai 1998 (1998-05-29),<br>pages 64-72, XP055290446,<br>US<br>ISSN: 0424-7760, DOI:<br>10.1002/eej.4391240408<br>* Summary *<br>* 1. Introduction *<br>* 2. Concept of holon * | 4-10 | DOMAINES TECHNIQUES RECHERCHES (IPC)<br><br>G07C |

Le présent rapport a été établi pour toutes les revendications

| Lieu de la recherche | Date d'achèvement de la recherche | Examinateur |
|---|---|---|
| La Haye | 21 mars 2017 | Pañeda Fernández, J |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 16 19 6623

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-03-2017

| Document brevet cité au rapport de recherche | Date de publication | Membre(s) de la famille de brevet(s) | Date de publication |
|---|---|---|---|
| US 2008086758 A1 | 10-04-2008 | US 2008086758 A1<br>WO 2008045918 A2 | 10-04-2008<br>17-04-2008 |
| EP 2584538 A1 | 24-04-2013 | CN 103067350 A<br>EP 2584538 A1<br>JP 5603398 B2<br>JP 2013089242 A<br>KR 20130042447 A<br>US 2013093563 A1 | 24-04-2013<br>24-04-2013<br>08-10-2014<br>13-05-2013<br>26-04-2013<br>18-04-2013 |
| US 2003130860 A1 | 10-07-2003 | AUCUN | |

EPO FORM P0460

Pour tout renseignement concernant cette annexe : voir Journal Officiel de l'Office européen des brevets, No.12/82